# EUROPEAN PATENT APPLICATION

(11) **EP 2 773 070 A1**
(43) Date of publication of application: **03.09.2014**
(21) Application number: 11866990.2
(22) Date of filing: 29.10.2011
(51) Int. Cl.: H04L 12/56

(54) **MULTICAST PROCESSING METHOD AND APPARATUS**

(71) Applicant: Huawei Technologies Co., Ltd., Shenzhen, Guangdong 518129 (CN)
(72) Inventor: CHEN, Ying, Shenzhen Guangdong 518129 (CN); LI, Yong, Shenzhen Guangdong 518129 (CN); PU, Yun, Shenzhen Guangdong 518129 (CN)
(74) Representative: Pfenning, Meinig & Partner GbR
(86) International application number: PCT/CN2011/081535
(87) International publication number: WO 2012/163032

(57) **Abstract**

A multicast processing method, device, and system are provided. The method includes: blocking a port 1, where the port 1 is one of an egress port and an ingress port, and the other of the egress port and the ingress port is a root port; receiving a join packet from the ingress port, wherein the packet is used for a multicast user to request joining multicast; and establishing, according to multicast information of the multicast included in the join packet and port information of the ingress port, a forwarding table entry for forwarding data of the multicast from the egress port to the ingress port. Through embodiments of the present invention, in the case that one port of the egress port and the ingress port is in a blocking state, a multicast forwarding table entry is established. Therefore, when a multicast path is enabled if a network is abnormal, multicast data may be forwarded directly according to the established multicast forwarding table entry, thereby achieving an effect of shortening the multicast service recovery time.

## Description

### FIELD OF THE INVENTION

The present invention relates to the field of data communications, and in particular, to a multicast processing method and device.

### BACKGROUND OF THE INVENTION

The multicast technology effectively solves the problem of single-point sending and multi-point receiving, implements efficient point-to-multipoint data transmission in the network, can greatly save the network bandwidth and reduce the network load. A host notifies, through the internet group management protocol (IGMP, Internet Group Management Protocol), a local router that the host intends to join and receive information of a certain multicast group. The router periodically queries, through the IGMP protocol, whether members in a certain known group in a local area network is in an active state, so as to collect and maintain a relationship between members of a connected network group.

IGMP Proxy or IGMP Snooping is generally run on a switch or a DSLAM used as a user access network. An implementation principle of the IGMP Proxy is: capturing an IGMP packet between a user and a router and establishing and maintaining a relationship between a multicast table entry and the user, where a port of a Proxy apparatus connected to the router plays a role of the host to act as an agent for the user to send an IGMP request packet and a leave packet and receive an IGMP query packet sent by the router; a port of the Proxy apparatus, connected to the user plays a role of the router to receive the IGMP request packet and the leave packet sent by the user and act as an agent for the router to send the IGMP query packet. An implementation principle of the IGMP Snooping is: snooping an IGMP packet for communication between a user and a router, maintaining a relationship between a multicast address and the user, and after receiving a multicast data packet from the router, forwarding the multicast data packet only to a user corresponding to the multicast group. MLD Proxy is similar to the IGMP Proxy, and MLD Snooping is similar to the IGMP Snooping.

In a current network requiring high quality, a loop network is generally formed, which is aimed at link protection. After one link is faulty, communication can be performed through another link. In a topology environment that a network is a loop, a spanning tree protocol such as the spanning tree protocol (STP, Spanning Tree Protocol), the rapid spanning tree protocol (RSTP, Rapid Spanning Tree Protocol), or the multiple spanning tree protocol (MSTP, Multiple Spanning Tree Protocol) is generally used for processing a broken loop, which is aimed at tailoring a redundant loop through a method of constructing a tree, and implementing link backup and path optimization. In the STP protocol, concepts such as a root bridge (Root Bridge), a root port (Root Port), a designated port (Designated Port), and a path cost (Path Cost) are defined. Port states such as forwarding (Forwarding), learning (Learning), and discarding (Discarding) are defined in a protocol stack of the STP protocol. The port states indicate whether a port can forward a packet. An algorithm for constructing the tree is called a spanning tree algorithm (SPA, Spanning Tree Algorithm). In the loop network, a port of an apparatus in the loop is set to a blocked port through the spanning tree protocol, so that the loop network is changed into a tree network, thereby achieving the purpose of breaking the loop. If the network topology is changed, a spanning tree protocol, such as STP, RSTP, or MSTP, packet notifies the blocked port of changing into a non-blocked port, thereby achieving the purpose of link backup. Meanwhile, loop network topology can be tailored into tree network topology by using the spanning tree protocol, such as the STP, RSTP, or MSTP, capable of breaking the loop, so that a multicast tree is formed between a multicast server and a multicast-on-demand user.

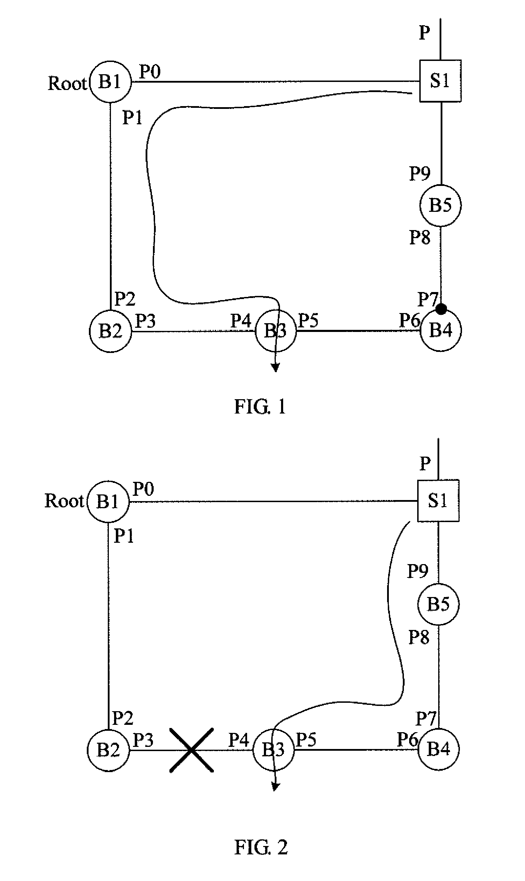

In an example of FIG 1, in an Ethernet loop network formed by digital subscriber line access multiplexers (DSLAM, Digital Subscriber Line Access Multiplexer), DSLAMs such as B1 to B5 have ports P0 to P9 respectively. Each af B1 and B5 on the loop has an uplink connected to a switch S 1 and uses the STP protocol. The switch S1 does not participate in the STP protocol processing, and only transparently transmits an STP protocol packet sent by a DSLAM. According to the STP protocol, a port P7 of B4 is blocked, B1 becomes a root bridge, multicast uplink ports such as P9, P6, P4, and P2 become root ports of B5, B4, B3, and B2, respectively, and the port P0 of the root bridge B1 is a multicast uplink port, and a port P on S1 becomes a multicast uplink port of the whole loop.

Because P7 is blocked, a multicast join packet or leave packet of a multicast user of the non-root bridge node B4, B3, or B2 is sent to the root bridge B 1 through the multicast uplink port that becomes the root port, and then sent to the switch through the port P0 of B1. For example, a join packet, for requesting a multicast program, of a multicast user at B3 is sent out through P4 which is a root port and an uplink port at the same time. The packet reaches B1 through B2, then the packet is sent to the switch S1 through the root bridge B1, and then sent to a destination server from S1. A multicast video stream arrives at the user also from S1 through the root bridge B1 along a multicast tree established by the multicast join packet, that is, from the switch S1, B1, B2, and B3 to the user, as shown by a curve with an arrow in FIG. 1. For the root bridge B1, P0 and P1 are both designated ports, and the port P0 may be configured as an uplink port. A multicast join packet and a leave packet sent by a user at B1 are sent out through the port P0. Accordingly, multicast data such as a multicast video stream is received from the port P0. A multicast join request of a multicast user at B5 is sent to S 1 through P9 which is a root port and a multicast uplink port at the same time.

S 1 does not participate in loop forming. S 1 supports transparent transmission of a BPDU packet between the ports P0 and P9, that is, B1 and B5 regard a link between the ports P0 and P9 as a direct connection link.

In some existing multicast protection technologies, mainly, when the loop network is faulty, the network topology is reconstructed by using the spanning tree protocol such as the STP, RSTP, or MSTP, and a new multicast tree is generated through the IGMP protocol again in the newly constructed network topology. Because the generation of the multicast tree depends on the regeneration of the network topology, it takes a long time to restore the multicast service. As shown in FIG. 2, when the network is faulty, for example, a link between P3 and P4 is faulty, the network topology structure may be recalculated through the STP protocol. In the new topology structure, the port P7 blocked is opened, P5 becomes a root port of B3, and P7 becomes a root port of B4. A set-top box at B3 re-initiates an IGMP packet, which reaches a multicast server after being sent out through an uplink port P5 that becomes the root port and through B4, B5, and S1. A multicast stream reaches the set-top box through a new multicast path passing through S1, B5, B4, and B3. In one case, if a link between B1 and S 1 is interrupted, because the root ports of B2, B3, and B4 are not switched, and the multicast protocol packet is still sent out through P2, P4, and P6 that are both root ports and multicast uplink ports, the multicast protocol packet cannot reach the multicast source, a multicast stream can reach the multicast source neither, and the multicast service cannot be restored, that is, the recovery time is infinitely long.

It can be seen that, because certain time is required to reestablish a multicast path, when the data of the multicast cannot be received after the network is abnormal, it takes a long time to restore the multicast service, thereby affecting the user experience.

### SUMMARY OF THE INVENTION

The present invention solves the problem that it takes a long time to restore a multicast service during multicast service protection currently.

According to an aspect, the present invention provides a multicast processing method, including:
blocking a port 1, where the port 1 is one port of an egress port and an ingress port, and the other port of the egress port and the ingress port is a root port;
receiving a join packet from the ingress port, wherein the packet is used for a multicast user to request joining multicast; and
establishing, according to multicast information of the multicast included in the join packet and port information of the ingress port, a forwarding table entry for forwarding data of the multicast from the egress port to the ingress port.

According to another aspect, the present invention provides a multicast processing device, including:
an egress port unit, an ingress port unit, and a control unit, where
the control unit is configured to set a state of a port unit 1 to a blocking state, where the port unit 1 is one port unit of the egress port unit and the ingress port unit, and the other port unit of the egress port unit and the ingress port unit is a root port unit;
after the state of the port unit 1 is set to the blocking state, the ingress port unit is configured to receive a join packet for requesting, by a multicast user, joining multicast; the control unit is configured to establish, according to multicast information of the multicast included in the join packet and port information of the ingress port, a forwarding table entry for forwarding data of the multicast from the egress port unit to the ingress port unit.

According to another aspect, the present invention provides a multicast processing system, including:
a first multicast access node and a second multicast access node, where
the first multicast access node blocks a port 1, where the port 1 is one port of an egress port and an ingress port of the first multicast access node, and the other port of the egress port and the ingress port is a root port; and
the first multicast access node receives, from the ingress port, a join packet for requesting, by a multicast user, joining multicast, where the join packet is sent by the second multicast access node, and establishes, according to multicast information of the multicast included in the join packet and port information of the ingress port, a forwarding table entry for forwarding data of the multicast from the egress port to the ingress port.

Through embodiments of the present invention, in the case that one port of the egress port and the ingress port is in a blocking state, a multicast forwarding table entry is established. Therefore, when a multicast path is enabled if a network is abnormal, multicast data may be forwarded directly according to the established multicast forwarding table entry, thereby achieving an effect of shortening the multicast service recovery time.

### BRIEF DESCRIPTION OF THE DRAWINGS

To describe the technical solutions according to the embodiments of the present invention more clearly, the accompanying drawings required for describing the embodiments are introduced below briefly. Apparently, the accompanying drawings in the following descriptions merely show some of the embodiments of the present invention, and persons of ordinary skill in the art can obtain other drawings according to the accompanying drawings without creative efforts.
FIG 1 is a schematic diagram of multicast processing in a loop network;
FIG 2 is a schematic diagram of multicast processing in a loop network;
FIG 3 is a schematic flow chart of a multicast processing method according to an embodiment of the present invention;
FIG 3a is a schematic flow chart of a multicast processing method according to an embodiment of the present invention;
FIG 4 is a schematic diagram of multicast processing according to an embodiment of the present invention;
FIG 5 is a schematic diagram of multicast processing according to an embodiment of the present invention;
FIG 6 is a schematic diagram of a multicast processing device according to an embodiment of the present invention; and
FIG 7 is a schematic diagram of a multicast processing system according to an embodiment of the present invention.

### DETAILED DESCRIPTION OF THE EMBODIMENTS

The technical solutions in embodiments of the present invention are clearly and fully described in the following with reference to the accompanying drawings in the embodiments of the present invention. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

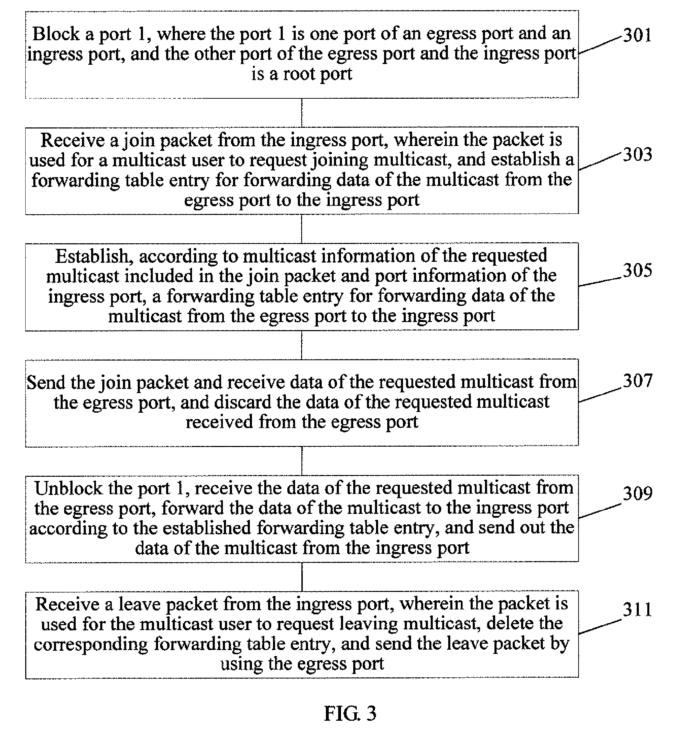

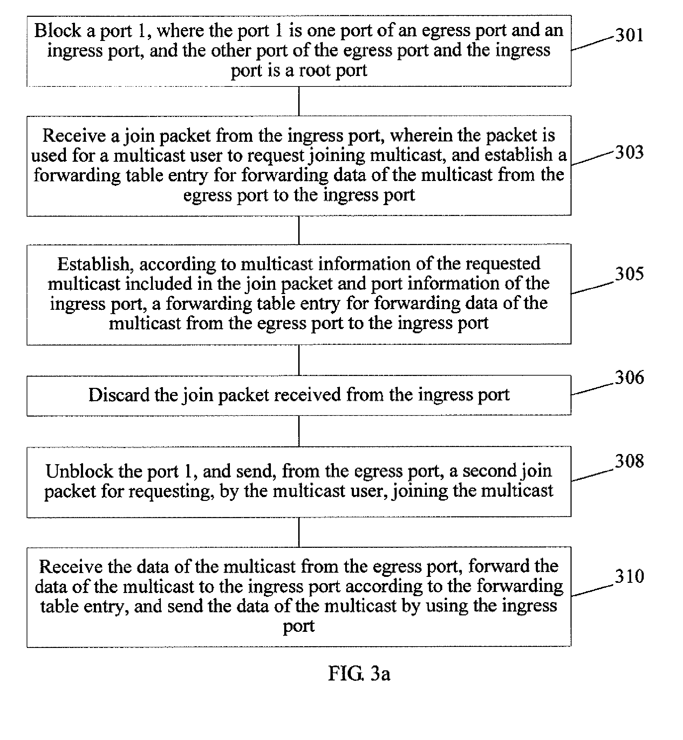

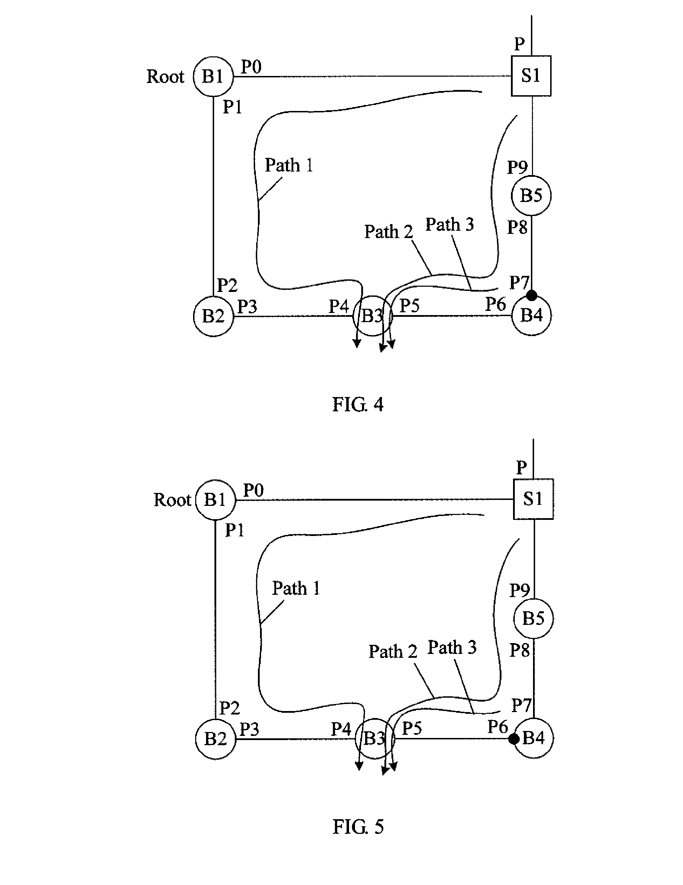

An embodiment of the present invention provides a multicast processing method in a physical loop network, as shown in FIG 3. The method is described in the following with reference to the accompanying drawings. In FIG. 4 and FIG 5, the network includes multicast access nodes B1 to B5. A multicast user acquires multicast data through a multicast access node. For example, the multicast access node may be a DSLAM access server, and an IPTV user acquires a multicast video stream through the DSLAM access server. A port P on S1 is a multicast uplink port of the whole loop. A multicast processing method on the multicast access node B4 is shown in FIG 3 and the method includes the following steps:

Step 301: Block a port 1, where the port 1 is one port of an egress port and an ingress port, and the other port is a root port.

In FIG 4 and FIG 5, P6 and P7 are an egress port and an ingress port of B4, respectively. Here, the egress port and the ingress port are relative. The two ports P6 and P7 participate in loop forming and are the egress port and the ingress port, respectively, or the ingress port and the egress port, respectively. A multicast packet is received from the ingress port and sent from the egress port. One of the egress port and the ingress port is blocked. The blocked port may be the egress port or the ingress port.

According to a loop network processing protocol, for example, loop network processing protocols such as MSTP, STP, RSTP, and ITU_TG803.2, in a process of establishing a logic tree network on the loop network, one port of P6 and P7 is blocked, where the blocked port may be P7 or P6, and the other port of P6 and P7 becomes a root port. The root port is a term used in a spanning tree. If a function or role of a port in another loop network processing protocol is similar to a function or role of a root port in the spanning tree protocol, the port should also be understood as the root port described in the embodiment of the present invention. To block the port 1, a port state may be set to Discarding in the STP protocol, or a port state may be set to Blocking in the RSTP protocol. Persons skilled in the art can understand that, although the names of states in different loop network processing protocols may be different, the functions or roles of ports in the states are similar.

In FIG. 4, a state of P7 is set to blocking, B1 becomes a root bridge, and multicast uplink ports P9, P6, P4, and P2 become root ports of B5, B4, B3, and B2, respectively. Except the root bridge, a multicast protocol packet at each node still sends a multicast join packet through each multicast uplink port that becomes the root port.

In FIG 5, a state of P6 is set to blocking, B1 becomes a root bridge, and multicast uplink ports P9, P7, P4, and P2 become root ports of B5, B4, B3, and B2, respectively.

In this embodiment, that S1 does not participate in the loop network processing protocol is taken as an example for description. The situation that S1 participates in loop network processing can be obtained according to the description of this embodiment by persons skilled in the art.

Specifically, a state of the port 1 may be set to blocking according to a received bridge protocol data unit (BPDU, Bridge Protocol Data Unit) of the spanning tree protocol.

In the prior art, after P7 is blocked, a multicast join request packet received from the blocked port is discarded by B4 and is not processed, and a multicast join packet is not sent from the blocked port, therefore the data of the requested multicast is not received either. However, in the embodiment of the present invention, the processing manner is different from that in the prior art.

Step 303: Receive, from the ingress port, a join packet for requesting, by a multicast user, joining multicast.

In FIG 4, B4 is connected to B3 through P6, and B4 can receive a join packet through P6, for example, an IGMP join packet or a multicast listener discovery (MLD, Multicast Listener Discovery) join packet, for a multicast user at a node B1, B2, or B3 to request joining multicast. That the IGMP Proxy runs on an apparatus B3 is taken as an example. A multicast user at B3 sends a join packet. The packet is intercepted by the apparatus B3. The apparatus, according to the content requested by the user, establishes a multicast forwarding table entry for forwarding data of the multicast through an IGMP join packet receiving port, and re-encapsulates the IGMP join packet. The join packet is sent through the port P4 that is the root port and the uplink port at the same time, and besides that, the join packet with the same content may also be sent through a designated port P5. The join packet is received by the port P6 of another non-root bridge node B4. P6 is an ingress port, and P6 is a multicast uplink port of B4. Although P6 used as the uplink port receives the join packet, B4 does not discard the join packet in a processing process, but regards P6 as a multicast cascade port, establishes a multicast forwarding table entry for forwarding the data of the multicast to the multicast user, encapsulates the join packet received from the multicast cascade port into a new join packet, and then sends the new join packet to another multicast uplink port P7. A multicast user accessing through the root bridge B1 sends out a join packet and receives the data of the multicast from the designated multicast uplink port P0, and besides that, may also send out the join packet through the port P1. The packet may also be received by the port P6 after being forwarded by B2 and B3.

In FIG 5, P6 is blocked. When P6 receives a join packet for requesting joining multicast sent by the multicast user at B3, the blocked port P6 is an ingress port. After P6 receives the join packet, P6 does not discard the join packet although the state of the port P6 is a blocking state, but performs the processing process described in the embodiment of the present invention.

Step 305: Establish, according to multicast information of the requested multicast included in the join packet and port information of the ingress port, a forwarding table entry for forwarding data of the multicast from the egress port to the ingress port.

The join packet received by P6 is processed by a functional component in B5 responsible for protocol processing. Information of the multicast which the user requests joining may be extracted from the join packet, including, but being not limited to, a multicast group address and a multicast source address of the multicast. A forwarding table entry for forwarding the data of the multicast from the egress port P7 to the ingress port P6 is established, where the table entry may include a combination of information such as a multicast group address of the multicast, a multicast source address, a virtual local area network identifier, a source port number, and a destination port. For example, the multicast forwarding table entry established in B4 may include a multicast group address, a virtual local area network identifier, and a destination port number P6. After receiving the data of the multicast, P7 queries the forwarding table according to the multicast group address of the data of the multicast to obtain the destination port number P6. Then, the data of the multicast is forwarded from P7 to P6.

In FIG 4 or FIG 5, the join packet received by P6 is processed by the functional component in B5 responsible for protocol processing. A forwarding table entry for forwarding the data of the multicast from the egress port P7 to the ingress port P6 can be established according to multicast information such as a multicast program address (multicast address and/or source IP address) of the multicast which the user requests joining and a multicast MAC address included in the join packet, and port information such as a port number of the ingress port and a virtual local area network identifier. For example, the multicast forwarding table entry established in B4 may include a multicast address of a multicast program and a port number of the destination port P6. After receiving the data of the multicast, P7 queries the forwarding table according to the multicast address of the multicast program of the data of the multicast to obtain the destination port number P6. Then, the data of the multicast is forwarded from P7 to P6.

Through step 301, step 303, and step 305, in the case that one port of the egress port and the ingress port is blocked, the forwarding table entry can be established according to the received multicast join packet, thereby ensuring protection in the case of a normal loop network link. The protection mechanism plays a part in a recovery process after the loop network is faulty. When the multicast service is restored, the data of the multicast can be directly forwarded according to the forwarding table entry, thereby shortening the multicast recovery time.

Alternatively, the method may further include the following step:

Step 307: Send the join packet and receive data of the requested multicast from the egress port, and discard the data of the requested multicast received from the egress port.

In FIG 4, although P7 is blocked, the join packet received from the ingress port is not discarded but sent out from the blocked port. After B5 receives the join packet from P8, B5 can consider that the join packet is received from the multicast cascade port, and send out the join packet through P9. The packet may be sent to a multicast server, and then the data of the requested multicast reaches the port P7 in a direction opposite to a direction of the join packet and the data is received. For example, the join packet is a join packet of a multicast user at B3. After being received by P8, the packet is sent out through P9. If the join packet of a multicast user at B5 comes from the port P10, the join packet is not only sent out from the port P8 which is the root port of B5 and the multicast uplink port at the same time and the packet reaches the multicast server through the root bridge B1, but also sent out through the blocked port P9. The data of the requested multicast is received from P9.

The multicast user at B3 can not only send out the join packet for requesting joining the multicast from the uplink port P4 which is used as the root port, and establish a multicast path 1 passing through S1, B1, B2, and B3, as shown in FIG 4, but also can establish a multicast path 2 passing through S1, B5, B4, and B3, as shown in FIG 4 because the join packet can be sent out from the blocked port P7.

After receiving the data of the requested multicast from P7, B4 discards the data of the multicast. The reason why the data of the multicast is not forwarded is that it can prevent the multicast user from receiving multiple pieces of multicast data, which affects the receiving effect.

In FIG 5, after the join packet for requesting, by the multicast user, joining the multicast received from the blocked ingress port P6 is sent out from the egress port P7, P7 receives the multicast data of the multicast. B4 discards the data of the multicast received from P7. Similarly, the multicast user at B3 can also establish two multicast transmission paths, path 1 and path 2.

A multicast path to the multicast source may be established by sending out the multicast join request and receiving and discarding a multicast stream, and the data of the multicast is received on the path. Therefore, after the loop network is faulty, in the recovery process, the received multicast data may be directly forwarded, thereby further shortening the multicast recovery time.

Specifically, the discarding the data of the requested multicast received from the egress port in step 307 may include the following situations for different conditions:

In FIG 4, for the join packet received by P6, the blocked port is the egress port P7. After the data of the multicast is received by the egress port P7, the egress port P7 directly discards the data of the multicast because the state of the egress port P7 is the blocking state.

In FIG 5, the blocked port is the ingress port P6. After the egress port P7 receives the data of the multicast, the data of the multicast is forwarded to the ingress port P6 according to the forwarding table entry established in step 303. Because the state of P6 is blocking, P6 does not send the data of the multicast, but the data of the multicast is discarded at the ingress port P6.

Alternatively, the method may further include the following step:

Step 309: Unblock the port 1, receive the data of the requested multicast from the egress port, forward the data of the multicast to the ingress port according to the established forwarding table entry, and send out the data of the multicast from the ingress port.

In FIG 4, when the network is abnormal, for example, a link between P3 and P4 is interrupted, the loop network processing protocol is run to unblock the blocked port 1, that is, P7. After P7 is unblocked, the data of the multicast received from the egress port P7 is no longer discarded, but the data of the multicast received by P7 is forwarded to P6 according to the established forwarding table entry, and P6 sends out the data of the multicast. For the join request of the user at B3 received from P6, the forwarding table entry is already established in step 305, and the data of the multicast is received. After unblocking, it is not required to wait for reestablishment of a multicast tree from the multicast source to B3, but the received multicast data is directly forwarded according to the established forwarding table entry, thereby shortening the time for restoring the multicast service after the network is abnormal.

Similarly, in FIG 5, after P6 is unblocked, the data of the multicast received from P7 may be forwarded to P6 according to the established forwarding table entry, and sent out through P6.

Alternatively, after receiving the join request of the multicast user, B4 may receive a leave packet at any time sent by the multicast user, for requesting leaving the multicast. The method in this embodiment may further include the following step:

Step 311: Receive, from the ingress port, a leave packet for requesting, by the multicast user, leaving the multicast, delete the corresponding forwarding table entry, and send the leave packet from the egress port.

Corresponding to the processing of the join packet, in the case that one of the ingress port and the egress port is blocked, if the multicast user intends to leave the multicast, the sent leave packet is received by the ingress port. The leave packet received from the ingress port is not discarded, but the multicast forwarding table entry established in step 305 is deleted according to the leave packet. If the blocked port is unblocked, the multicast user leaves the multicast, the ingress port receives the leave packet, and the forwarding table entry is deleted accordingly Corresponding to the join packet, the leave packet may be an IGMP leave packet or an MLD leave packet.

In an embodiment, after the join packet is received from the ingress port, as described in step 307, the join packet is forwarded from the egress port, and then the multicast data of the requested multicast may be received. In another embodiment, as shown in FIG 3a, alternatively, after step 305, the method may further include the following step:

Step 306: Discard the join packet received from the ingress port.

After the ingress port receives the join packet, the forwarding table entry is established according to the join packet. However, one port of the ingress port and the egress port is in the blocking state, so the packet may not be sent out from the egress port, but is discarded. In this way, the join packet cannot reach the multicast server, and the data of the multicast cannot reach the egress port neither.

In FIG 4, the multicast user accessed from B3 can not only send the join packet for requesting joining the multicast from the uplink port P4 which is used as the root port, and establish the multicast path 1 passing through S1, B1, B2, and B3, but also can establish the multicast path 3 passing through B4 and B3, as shown in FIG. 4 because the forwarding table entry is established in B4. Different from the path 2, the join packet is not sent out from P7, so the data of the multicast is not received, and a partial multicast path is established. In FIG 5, similar to FIG 4, a multicast path 3 passing through B4 and B3 is also established.

In this case, the method may further include the following steps:

Step 308: Unblock the port 1, and send a second join packet from the egress port, where the join packet is used for the multicast user to request joining the multicast.

When a link of the loop network is abnormal, for example, the link between P3 and P4 is interrupted, B4 receives a network topology structure adjustment packet of the loop network processing protocol, so as to unblock the blocked port of the egress port and the ingress port. After the network topology is changed, B4 may forward out the second join packet if the multicast user resends a multicast join request; B4 may locally construct a second join packet and send the second join packet if the multicast user does not resend the join packet. For example, when the multicast user at B3 resends out the second join packet for requesting joining the multicast, the ingress port P6 receives the second join packet, and the egress port P7 sends out the packet. B4 may also construct a join packet of the multicast user and send the join packet according to relevant data that is stored after the join packet sent by the multicast user is received before.

Step 310: Receive the data of the multicast from the egress port, forward the data of the multicast to the ingress port according to the forwarding table entry, and send the data of the multicast from the ingress port.

After the second multicast packet is sent out and the packet reaches the multicast server, the egress port P7 receives the multicast data and forwards the received data of the multicast to P6 according to the forwarding table entry established in step 305. P6 sends out the data of the multicast.

Because the forwarding table entry is already established in step 305, after the loop network is faulty, the data of the multicast may, in the recovery process, be directly forwarded according to the established forwarding table entry after the join packet is sent out and the data of the multicast is imported, thereby shortening the multicast recovery time. In contrast to step 309, in the processing of step 308 and step 310, the join packet needs to be resent to import the multicast stream, so the multicast recovery time is longer than that in step 309.

In the processing of the leave packet, when the port 1 is in the blocking state, the leave packet is received and the corresponding multicast forwarding table entry is deleted. Because the join packet is not forwarded, the leave packet is discarded. After the port 1 is unblocked, the corresponding multicast table entry is deleted when the multicast user intends to leave the multicast, and besides that, the leave packet needs to be sent out to notify the multicast source of stopping sending the data of the multicast.

In FIG 4, for the multicast user accessing through B4, after the join packet for requesting, by the multicast user, joining the multicast is received from the user port, the forwarding table entry is established. The join packet is sent out from P6 that is the root port and the uplink port at the same time and the data of the multicast is received from P6; besides that, the join packet may be sent out from the blocked port P7 and the data of the multicast is imported, but the data of the multicast received from P7 is discarded when P7 is blocked. After P7 is unblocked, the data of the multicast received from P7 may be immediately forwarded to the user port according to the forwarding table entry.

When a multicast node in the embodiment of the present invention processes the multicast protocol packets including the multicast join packet and the multicast leave packet, the multicast node can re-encapsulate the multicast protocol packet according to the IGMP Proxy protocol after receiving the multicast protocol packet, and control a rhythm of sending the multicast protocol packet. Alternatively, the received multicast protocol packet is forwarded according to the IGMP Snooping protocol. For example, when an apparatus has established a multicast forwarding table entry of the join packet, the apparatus does not need to send the multicast join packet immediately, but sends the multicast join packet after receiving a corresponding multicast query packet or according to a certain rhythm.

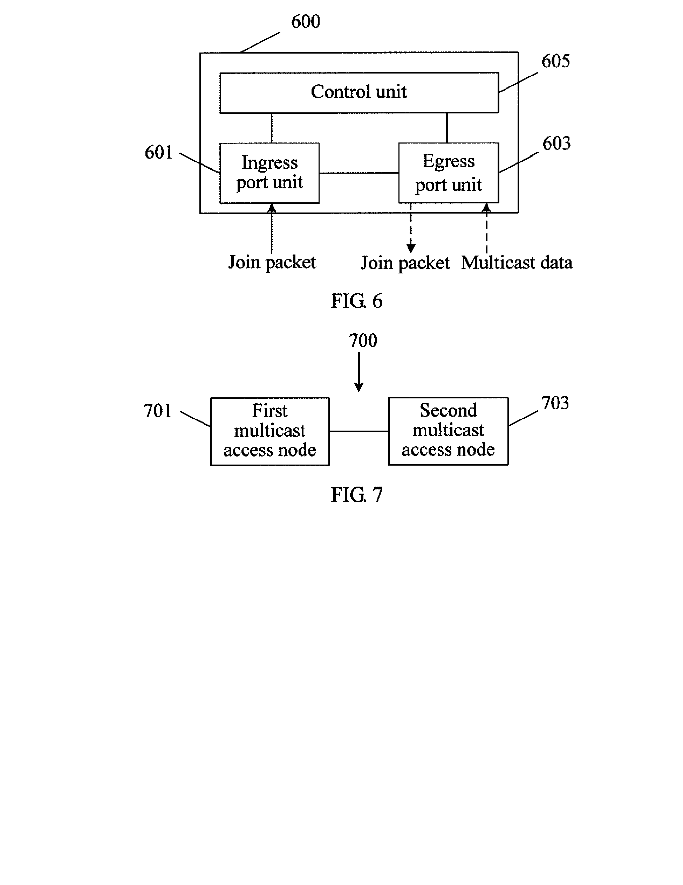

An embodiment of the present invention provides a multicast processing device. As shown by 600 in FIG 6, the device may be implemented on a multicast access node, for example, the multicast access node in the loop network shown in FIG 4 or FIG 5. The device includes:
an egress port unit 601, an ingress port unit 603, and a control unit 605.

The control unit 605 is configured to set a port unit 1. The port unit 1 is one port unit of the egress port unit 601 and the ingress port unit 603. The control unit is configured to set a state of the port unit 1 to a blocking state. One of the egress port unit and the ingress port unit may be set to in the blocking state according to a loop network processing protocol such as a spanning tree protocol.

After the state of the port unit 1 is set to the blocking state, the ingress port unit is configured to receive a join packet for requesting, by a multicast user, joining multicast; the control unit is configured to establish, according to multicast information of the requested multicast included in the join packet and port information of the ingress port, a forwarding table entry for forwarding data of the requested multicast from the egress port unit to the ingress port unit. The join packet may be an internet group management protocol join packet or a multicast listener discovery protocol join packet.

Alternatively, the egress port unit is further configured to send the join packet and receive the data of the requested multicast. When the port unit 1 is the egress port unit, the data of the multicast is discarded at the egress port unit; alternatively, when the port unit 1 is the ingress port unit, the data of the multicast received by the egress port unit is forwarded to the ingress port unit according to the established forwarding table entry, and the data of the multicast is discarded at the ingress port unit.

Furthermore, the control unit is configured to set the state of the port unit 1 to a non-blocking state. For example, when the topology structure of a loop network where the device is located is changed, the control unit unblocks the blocked port unit 1 and sets the state of the port unit 1 to the non-blocking state according to a spanning tree protocol packet.

After the state of the port unit 1 is changed into the non-blocking state, the egress port unit is configured to receive the data of the requested multicast and forward the data of the multicast to the ingress port unit according to the established forwarding table entry, and the ingress port unit is configured to send the data of the multicast.

Alternatively, the control unit is configured to discard the join packet received from the ingress port unit.

Furthermore, after the control unit is configured to set the state of the port unit 1 to the non-blocking state, the ingress port unit is configured to receive a second join packet for requesting, by the multicast user, joining the multicast; the egress port unit is configured to send the second join packet, receive the data of the requested multicast, and forward the data of the multicast to the ingress port unit according to the established forwarding table entry; and the ingress port unit is configured to send the data of the multicast.

Alternatively, the ingress port unit is configured to receive a leave packet for requesting, by the multicast user, leaving the multicast. The control unit is configured to delete a corresponding forwarding table entry, where the forwarding table entry is established according to the join packet for requesting joining the multicast sent by the multicast user. Before the port unit 1 is unblocked, if the join packet is sent out from the egress port unit, the leave packet is also sent out; if the join packet is discarded, the leave packet is also discarded. After the port unit 1 is unblocked, the leave packet is sent out. The leave packet may be an internet group management protocol leave packet or a multicast listener discovery protocol leave packet.

The egress port unit and the ingress port unit described in this embodiment may be implemented in a general local area network switch (LSW, Local Area Network Switch) chip, and may also be implemented in an application specific integrated circuit (ASIC, Application Specific Integrated Circuits). For example, if the state of the egress port unit or the ingress port unit needs to set to blocking according to the RSTP protocol, a state of a port of the LSW/ASIC in an STP state table may be set to blocking.

The control unit may be implemented by running software on a general purpose processor. The control unit may control behavior, for example, being a blocked port, of a port of hardware by setting a register or a table entry. The control unit may set the state of the port of the corresponding LSW/ASIC in the STP state table to blocking. In order to enable the port to send the data of the multicast, an element of a multicast group may be configured into a multicast program table of the LSW/ASIC, where the element of the multicast group includes, but is not limited to, elements such as a multicast group address, a multicast source address, and a virtual local area network. Outbound port information of the multicast group may also be configured. The data packet of the multicast enters from the ingress port, then is matched to the multicast program table, and is forwarded to the egress port according to the egress port information of the multicast program. If the state of the egress port is blocking, the data packet of the multicast is not sent out; if the state of the ingress port is blocking, the data packet of the multicast is not forwarded to the egress port.

An embodiment of the present invention provides a multicast processing system. As shown by 700 in FIG 7, the system includes:
a first multicast access node and a second multicast access node. For example, in FIG 4 or FIG 5, the first multicast access node and the second multicast access node are multicast access nodes in a loop network.

The first multicast access node blocks a port 1, where the port 1 is one port of an egress port and an ingress port of the first multicast access node. One of the egress port unit and the ingress port unit may be set to be in a blocking state according to a loop network processing protocol such as a spanning tree protocol.

The first multicast access node receives, from the ingress port, a join packet for requesting, by a multicast user, joining multicast, where the join packet is sent by the second multicast access node, and establishes, according to multicast information of the requested multicast included in the join packet and port information of the ingress port, a forwarding table entry for forwarding data of the requested multicast from the egress port to the ingress port. The join packet may be an internet group management protocol join packet or a multicast listener discovery protocol join packet.

Alternatively, the first multicast access node sends the join packet and receives the data of the requested multicast from the egress port, and discards the received data of the multicast.

Furthermore, the first multicast access node unblocks the port 1, receives the data of the requested multicast from the egress port, forwards the data of the multicast to the ingress port according to the established forwarding table entry, and sends the data of the multicast from the ingress port to the second multicast access node.

Alternatively, the first multicast access node discards the join packet received from the ingress port.

Furthermore, the first multicast access node unblocks the port unit 1, receives a second join packet from the ingress port, where the join packet is used for the multicast user to request joining the multicast, sends the second join packet from the egress port, then receives the data of the requested multicast from the egress port, forwards the data of the multicast to the ingress port according to the established forwarding table entry, and sends the data of the multicast from the ingress port to the second multicast access node.

Alternatively, the first multicast access node may receive a leave packet for requesting, by the multicast user, leaving the multicast, where the join packet is sent by the second multicast node, and may delete a corresponding forwarding table entry after receiving the leave packet, where the forwarding table entry is established according to the join packet for requesting joining the multicast sent by the multicast user. The leave packet may be received before or after the port 1 is unblocked. Before the port 1 is unblocked, if the join packet is sent out from the egress port, the leave packet is also sent out; if the join packet is discarded, the leave packet is also discarded. After the port unit 1 is unblocked, the leave packet needs to be sent out. The leave packet may be an internet group management protocol leave packet or a multicast listener discovery protocol leave packet.

Persons skilled in the art can understand the embodiments of the multicast processing system and the multicast processing device and the embodiment of the multicast processing method with cross-reference to the content of the method embodiment, the content of the device embodiment, and the content of the system embodiment.

Through the foregoing description of the implementation manners, it is clear to persons skilled in the art that the present invention may be accomplished through software plus a necessary hardware platform, or absolutely through hardware. Based on this, the foregoing technical solutions of the present invention or the part that makes contributions to the prior art can be embodied in the form of a software product. The computer software product may be stored in a storage medium such as a ROM/RAM, a magnetic disk, or an optical disk, and contain several instructions to cause a computer apparatus (for example, a personal computer, a server, or a network apparatus) to perform the method described in the embodiments or in some parts of the embodiments of the present invention.

The foregoing descriptions are merely specific embodiments of the present invention, but the protection scope of the present invention is not limited hereto. Any variation or replacement easily occurring to persons skilled in the art within the technical scope disclosed by the present invention should fall within the protection scope of the present invention. Therefore, the protection scope of the present invention is subject to the protection scope of the claims.

## Claims

1. A multicast processing method, comprising:
blocking a port 1, wherein the port 1 is one port of an egress port and an ingress port, and the other port of the egress port and the ingress port is a root port;
receiving a join packet from the ingress port, wherein the packet is used for a multicast user to request joining multicast; and
establishing, according to multicast information of the multicast comprised in the join packet and port information of the ingress port, a forwarding table entry for forwarding data of the multicast from the egress port to the ingress port.

2. The method according to claim 1, further comprising:
sending the join packet and receiving the data of the multicast from the egress port; and
discarding the data of the multicast received from the egress port.

3. The method according to claim 2, wherein the discarding the data of the multicast received from the egress port comprises:
when the port 1 is the egress port, discarding the data of the multicast at the egress port; or
when the port 1 is the ingress port, forwarding the data of the multicast received from the egress port to the ingress port according to the forwarding table entry, and discarding the data of the multicast at the ingress port.

4. The method according to claim 3, further comprising:
unblocking the port 1; and
receiving the data of the multicast from the egress port, forwarding the data of the multicast to the ingress port according to the forwarding table entry, and sending the data of the multicast from the ingress port.

5. The method according to any one of claims 1 to 4, further comprising:
receiving a leave packet from the ingress port, wherein the packet is used for the multicast user to request leaving the multicast, deleting the forwarding table entry, and sending the leave packet by using the egress port.

6. The method according to claim 1, further comprising:
discarding the join packet.

7. The method according to claim 6, further comprising:
receiving a leave packet from the ingress port, wherein the packet is used for the multicast user to request leaving multicast, deleting the forwarding table entry, and discarding the leave packet.

8. The method according to claim 6, further comprising:
unblocking the port 1;
sending, by using the egress port, a second join packet for requesting, by the multicast user, joining the multicast; and
receiving the data of the multicast from the egress port, forwarding the data of the multicast to the ingress port according to the forwarding table entry, and sending the data of the multicast from the ingress port.

9. The method according to claim 8, further comprising:
receiving a leave packet from the ingress port, wherein the packet is used for the multicast user to request leaving multicast, deleting the forwarding table entry, and sending the leave packet by using the egress port.

10. A multicast processing device, comprising:
an egress port unit, an ingress port unit, and a control unit, wherein
the control unit is configured to set a state of a port unit 1 to a blocking state, wherein the port unit 1 is one port unit of the egress port unit and the ingress port unit, and the other port unit of the egress port unit and the ingress port unit is a root port unit;
after the state of the port unit 1 is set to the blocking state, the ingress port unit is configured to receive a join packet for requesting, by a multicast user, joining multicast; the control unit is configured to establish, according to multicast information of the multicast comprised in the join packet and port information of the ingress port, a forwarding table entry for forwarding data of the multicast from the egress port unit to the ingress port unit.

11. The device according to claim 10, wherein
the egress port unit is configured to send the join packet and receive the data of the multicast; when the port unit 1 is the egress port unit, the data of the multicast is discarded at the egress port unit; or
when the port unit 1 is the ingress port unit, the data of the multicast received from the egress port unit is forwarded to the ingress port unit according to the forwarding table entry, and the data of the multicast is discarded at the ingress port unit.

12. The device according to claim 11, wherein
the control unit is configured to set the state of the port unit 1 to a non-blocking state; and after the state of the port 1 is changed into the non-blocking state, the egress port unit is configured to receive the data of the multicast and forward the data of the multicast to the ingress port unit according to the forwarding table entry, and the ingress port unit is configured to send the data of the multicast.

13. The device according to claim 10, wherein
the control unit is configured to discard the join packet.

14. The device according to claim 13, wherein
the control unit is configured to set the state of the port unit 1 to a non-blocking state; and after the state of the port 1 is changed into the non-blocking state, the ingress port unit is configured to receive a second join packet for requesting, by the multicast user, joining the multicast; and
the egress port unit is configured to send the second join packet, receive the data of the multicast, and forward the data of the multicast to the ingress port unit according to the forwarding table entry, and the ingress port unit is configured to send the data of the multicast.

15. The device according to any one of claims 10 to 14, wherein
the ingress port unit is configured to receive a leave packet for requesting, by the multicast user, leaving the multicast; and
the control unit is configured to delete the forwarding table entry.

16. A multicast processing system, comprising:
a first multicast access node and a second multicast access node, wherein
the first multicast access node blocks a port 1, wherein the port 1 is one port of an egress port and an ingress port of the first multicast access node, and the other port of the egress port and the ingress port is a root port; and
the first multicast access node receives, from the ingress port, a join packet for requesting, by a multicast user, joining multicast, wherein the join packet is sent by the second multicast access node, and establishes, according to multicast information of the multicast comprised in the join packet and port information of the ingress port, a forwarding table entry for forwarding data of the multicast from the egress port to the ingress port.

17. The system according to claim 16, wherein
the first multicast access node sends the join packet and receives the data of the multicast from the egress port, and discards the data of the multicast received from the egress port.

18. The system according to claim 17, wherein
the first multicast access node unblocks the port 1; and
the first multicast access node receives the data of the multicast from the egress port, forwards the data of the multicast to the ingress port according to the forwarding table entry, and sends the data of the multicast from the ingress port to the second multicast access node.

19. The system according to any one of claims 16 to 18, wherein
the first multicast access node receives, from the ingress port, a leave packet for requesting, by the multicast user, leaving the multicast, deletes the forwarding table entry, and sends the leave packet by using the egress port.

20. The system according to claim 16, wherein
the first multicast access node discards the join packet.

21. The system according to claim 20, wherein
the first multicast access node receives, from the ingress port, a leave packet for requesting, by the multicast user, leaving the multicast, deletes the forwarding table entry, and discards the leave packet.

22. The system according to claim 20, wherein
the first multicast access node unblocks the port 1;
the first multicast access node receives, from the ingress port, a second join packet for requesting, by the multicast user, joining the multicast;
the first multicast access node sends the second join packet by using the egress port; and
the first multicast access node receives the data of the multicast from the egress port, forwards the data of the multicast to the ingress port according to the forwarding table entry, and sends the data of the multicast from the ingress port to the second multicast access node.

23. The system according to claim 22, wherein
the first multicast access node receives, from the ingress port, a leave packet for requesting, by the multicast user, leaving the multicast, deletes the forwarding table entry, and sends the leave packet by using the egress port.
